# EUROPEAN PATENT SPECIFICATION

(11) **EP 2 027 986 B1**
(45) Date of publication and mention of the grant of the patent: **06.10.2010**
(21) Application number: 07114701.1
(22) Date of filing: 21.08.2007
(51) Int. Cl.: B29C 51/10, B41M 7/00, B44C 1/17, B29C 51/14

(54) **Method of decorating parts of motor vehicles**
Verfahren zur Dekoration von Teilen von Kraftfahrzeugen
Procédé de décoration de pièces de véhicules à moteur

(43) Date of publication of application: 25.02.2009
(73) Proprietor: 3M Innovative Properties Company, St. Paul MN 55144-1000 (US)
(72) Inventor: Muller, Carlo, 1831 Diegem (BE); Lando, Matteo, 1831 Diegem (BE)
(74) Representative: Voortmans, Gilbert J.L.

(56) References cited:
- EP-A- 0 949 120
- US-A- 5 795 420
- US-A- 6 045 646
- US-A1- 2004 152 799
- US-A1- 2005 191 470

## Description

The present invention relates to a method of decorating parts of a vehicle, in particular motor vehicles such as a motorbike or car. In particular the method of the present invention relates to a method of thermoforming a thermoformable polymeric sheet that has been printed.

Vehicles and in particular motorbikes include various plastic parts that desirably contain a particular decorative look or design. For example, the parts of the vehicle that may carry such a decorative plastic part include fuel tank covers, side mirror covers, pillars and window supports. Typically, these designs change from one season to another and hence the number of vehicles with such plastic decorative designs in a season and particular series are limited. Furthermore, typically these parts are exposed to the exterior and thus exposed to varying weather conditions such as temperature fluctuations, sun shine, humidity, rain, snow etc... The exposure to varying weather conditions impose very stringent requirements on the durability of the plastic part and the decorative designs applied thereon.

Accordingly, these decorative plastic parts of a vehicle have so far been produced by injection molding methods. A typically used injection molding method is known as in-mold decoration (IMD). See for example US Patent Nos. 4,059,471; 4,650,533; 4,356,230 and 4,202,663. IMD combines the process of forming an article by injection molding with decoration of the article. In this method, a plastics carrier sheet, bearing a printed image, is placed in the cavity of an injection molding tool. Molten thermoplastic resin is then injected into the cavity to contact the carrier sheet. With suitable design of the injection molding tool, the pre-printed plastics carrier sheet becomes integral to the molded article or part. This is contrasted with the process described, for example, in European Patent application No. 799,681, where an image is transferred onto an article during the injection molding process. The molding process therein disclosed is a reaction injection molding, whereby reactive polymer components are injected into a mold at a relatively low temperature. The reactive components are mixed by injection and undergo a reaction, which raises the temperature of the mixture in the mold and produces hardened, cross-linked polymers.

The injection molding technique allows obtaining good results in terms of quality and precision also in case of decoration of articles having a complex shape. However, it has the disadvantage that it is very difficult and expensive to make modifications to the molds or any personalization to the printing process.

Thus, although durable parts can be produced with this method, the method has the disadvantage that it is expensive because of the investment in one or more molding tools used in injection molding. This is particularly so when only a limited amount of parts are to be produced, for example for a limited series.

WO 2004/067599 discloses radiation curable inks for use in in-mold-decoraton and in-mold-coating processes. This PCT application also discloses the use of radiation curable inks for use in thermoforming processes.

EP 0 949 120 A1 discloses a flexible, weatherable decorative sheet material useful as a surfacing film for automobile parts is provided comprising a base layer of extruded, pigmented, flexibilized polyalkyl methacrylate film and a substantially transparent clear outer layer overlying a first surface of the base layer.

It would now be desirable to find a method of decorating parts of a vehicle in a more cost effective way while still meeting the requirements imposed on such parts, particular when exposed to varying weather conditions. It would in particular be desirable to find a method that allows producing in a cost effective way even a very limited number of such parts, for example even up to the level of a personalized part for a single vehicle.

In accordance with the present invention, there is provided a method of decorating a part of a vehicle, comprising (i) printing an ink composition onto a major surface of a transparent thermoformable polymeric sheet to obtain a printed sheet and :
(ii) providing a mold having the shape and size of the part to be decorated;
(iii) heating the printed sheet;
(iv) pressing the mold against the printed sheet and applying vacuum thereto to allow the printed sheet to wrap around the mold;
(v) removing the printed sheet from the mold; and
(vi) mounting the printed and formed sheet on the part of said vehicle such that the printed ink composition faces the part of the vehicle that is being decorated;
or alternatively :
(ii) providing a part to be decorated;
(iii) heating the printed sheet; and
(iv) pressing the part against the printed side of the printed sheet and applying vacuum thereto to allow the printed sheet to wrap around the part; wherein following heating of said printed sheet, a negative pressure is applied to one side of the sheet followed by a positive pressure from said same side.

The method allows producing decorative parts for a vehicle, in particular motor vehicle, in an inexpensive way. In particular, the method even allows producing highly customized parts upto the level of a single vehicle. As a mold for use in the method, one may use the part of the vehicle to be decorated as the mold. For example, when decorating a side mirror, the injection molded housing of the mirror can be used as the mold in the thermoforming method. Alternatively, a mold can be produced by Computerized Numerically Controlled milling techniques from a suitable material such as a resin or aluminum using CAD data describing the 3D-geometry of the desired part, for example the size and shape of a fuel tank of a motor bike.

The method is also capable of producing complex designs that are durable even when exposed to variable weather conditions to which the vehicle bearing the part may be exposed. For example, the designs are well protected against scratching and wearing, typically have good light fastness, resistance to heat and humidity.

The method of the present invention is particularly suitable for decorating parts of a motor vehicle such as a motorbike, car, truck or bus. Examples of parts of a vehicle that may be decorated include side mirrors, fuel tanks, pillars, window supports and stone chip resistant claddings.

In accordance with the method of the present invention, a thermoformable polymeric sheet is printed on at least one major side with an ink composition. Suitable printing techniques include flexographic printing, pad printing of tampo-printing, screen printing and digital printing including for example inkjet printing. A typically preferred method is screen printing.

Screen printing is essentially a stencil printing process which may now be generated by computer with the aid of various software packages. Its ability to vary and control ink thickness accurately has made it an extremely useful process for the decoration of many different types of plastic substrates.

In screen printing, as disclosed for example in US Patent No. 6,465,102, a screen or stencil is prepared and bonded to a fine weave fabric which is then tensioned in a rigid frame. The basic screen-printing process involves, for example, the use of a flat bed where generally the substrate is held by vacuum during printing.

The printing step of the method may be repeated one or more times as needed, one for each color, depending on the number of desired color combinations to be printed on the decorated surface of the final article to obtain a desired full color decorated surface. It can be desirable to limit the number of times the printing step of the method is repeated, where the printed images at least overlap one on top of the other, in order to avoid interlayer adhesion problems resulting from image stacks that are too thick. It may be desirable to limit such printed image stacks to 5 or 6 layers (i.e., 5 or 6 printing steps) for the same decorative part.

Further, in order to obtain a desired design on the ultimate 3D part, it will generally be necessary to adjust for image deformation occurring when going from an image on the flat surface of the printed sheet to the image on the surface of the 3D formed part. This can be readily done with the aid of commercially available software such as the Rhino 4.0 NonUniform Rational B-Splines (NURBS) software which calculates the image to be printed on the flat thermoformable sheet to obtain an image as desired on the surface of the 3D formed part. Also, an image will typically be reverse printed so that it appears proper to the viewer when the part is mounted on the vehicle.

Thermoformable polymeric sheets useful for receiving ink during the printing step according to the method of the present invention include transparent thermoformable polymeric sheets. The sheets are typically clear transparent but it is also contemplated to use translucent sheets including colored translucent sheets. The transparent thermoformable polymeric sheet may be comprised of polymer materials such as, for example, polycarbonate, polyesters, polyacrylates, polystyrene, polyethyleneterephthalate glycol (PETG), acrylonitrile butadiene styrene (ABS), thermoplastic polyolefin (TPO), polypropylene, acrylic compounds, and mixtures thereof. Due to superior mechanical and thermal properties, polycarbonate is preferred in the manufacturing of numerous part and components in the automotive industry. However, any other suitable thermoformable polymeric sheet may be used. The substrate may be a single layer structure or a multilayered structure, for example a multilayer coextruded plastic substrate.

Specific examples of polycarbonate materials that can be used for the thermoformable polymeric sheet include, but are not limited to: Makrolon® polycarbonate sheets, available from Bayer AG (Darmstadt, Germany). It can be particularly desirable (e.g., for Automotive applications) to use polycarbonate or other thermoformable polymeric sheets that have been adapted to be resistant against degradation caused by ultraviolet (UV) radiation such as, for example, Makrofol® TP244, Makrolon® 1099UV or GE Lexan SLX, available from General Electric Corporation. The ink image is printed on the backside of the polymeric sheet, the top surface (i.e., opposite to the printed ink) can be UV protected. Protecting against UV radiation can significantly improve the durability of the printed ink image and the thermoformable plastic sheet.

The transparent thermoformable polymeric sheet typically will have a thickness between 0.1 and 10 mm, for example between 0.2 and 8mm or between 0.25 and 5mm. Also, in a particular embodiment, the thermoformable polymeric sheet will be protective with a protective sheet that is releasably adhered on the side of the sheet that will not be receiving the printing. Such protective sheet offers the advantage of protecting the decorative article to be produced from becoming damaged, e.g. scratched, during the handling of the thermoformable sheet and decorative article produced.

The ink composition for use in the printing of the thermoformable polymeric sheet will vary depending on the particular printing technique used. Typically the ink composition will contain dyes and/or pigments that are dissolved or dispersed in a liquid. In a particular embodiment, the ink composition may contain metal particles including for example aluminium particles. In a further embodiment, the ink composition may contain pearlescent pigments. The liquid may comprise organic solvents or may be an aqueous medium. Typically a solvent based ink composition will be used. The ink composition preferably provides a ink coating that has sufficient elongation characteristics such that complex 3D shapes with sharp drawing angles can be produced without the risk of displeasing cracks or other similar defects occurring in the ink printed design. Accordingly, the ink composition will typically include one or more resins or alternatively components that upon activation, for example by heating, produce a resinous coating. Typically it will be desired that the printed sheet can be elongated by at least 100% or at least 200 % or at least 300% without or without substantial defects occurring in the printing as elavuated according to DIN EN ISO 4628/2003. Particular artifacts or defects that may occur on elongation of the printed sheet in the thermoforming and that are evaluated according to the aforementioned standard include: Cracking (physical cracks or crazing of the ink coating), pin holes (voids in the ink coating), striations (line defects in the direction of elongation), loss of opacity (due to thinning), colour change (due to thinning).

In a particular embodiment of the present invention, screen printing is used to print the ink composition. In one embodiment, the ink composition suitable for use in screen printing includes one or more organic solvents and one or more resins. Suitable resins include polyester-based resins, polycarbonate-based resins, polyvinyl chloride-based resins, acrylic-based resins, polycaprolactones or similar. Mixtures of synthetic resins can be advantageously employed. The resins may or may not have reactive groups for optional reaction with other components in the composition, for example isocyanate reactive groups for reaction with an isocyanate component in the composition.

Suitable solvents or solvent blends for use with the ink composition include those selected from ketones, such as, for example, cyclohexanone, isophorone, diacetone alcohol, acetophenone, di-isobutyl ketone; esters, such as for example, methoxypropyl acetate, isopropoxyethyl acetate, diethylene glycol ethyl ether acetate, ethylene glycol butyl ether acetate, ethoxyethyl propionate, ethyl lactate, isopropoxyethyl acetate, ethoxypropyl acetate, dimethyl succinate, dimethyl glutarate, dimethyl adipate, butoxyethyl acetate; and amides, such as for example, N-methylpyrrolidone. A mixture of these solvents may also be used.

In a particular embodiment, the solvent used is cyclohexanone. In particular, it is believed that the use of cyclohexanone as a solvent and the use of the polycarbonate as thermoformable polymeric sheet has the advantage to greatly improve the penetration into the thermoformable polymeric sheet of the ink material containing the ink composition and the solvent in which the ink composition is soluble.

In a particular aspect of the embodiment of screen printing, the ink composition includes a curable composition. A suitable curable composition comprises a polyisocyanate and a compound having isocyanate reactive groups. Suitable isocyanate reactive groups include hydroxyl groups and amino groups. In one embodiment of the invention, the compound having isocyanate reactive groups is a polymeric compound (e.g., a polymeric polyol). Generally, the compound having isocyanate reactive groups comprises at least two, generally at least three isocyanate reactive groups. Examples of compounds having isocyanate reactive groups include polyols, in particular acrylic or methacrylic homo- or copolymers having hydroxyl groups, for example having at least three hydroxyl groups. Further suitable isocyanate reactive compounds include polyolefins having isocyanate reactive groups, polyesters having isocyanate groups, polyurethanes having isocyanate reactive groups etc... In a particular embodiment in connection with the present invention, the curable composition includes a caprolactone or caprolactone polyol (i.e., polycaprolactone) having isocyanate reactive groups, in particular having two or three hydoxy groups. More particularly, the curable composition can include a polyester polyol, derived from caprolactone monomer, terminated by primary hydroxyl groups. The molecular weight of the isocyanate reactive compound may vary widely and can be between 500 g/mol and 500,000 g/mol, for example between 1000 g/mol and 100,000 g/mol or between 10,000g/mol and 80,000 g/mol. Simple low molecular weight compounds may be used as well such as for example alkane diols and alkane triols such as for example glycerol, butane diol and the like. The properties of the ink composition can be tailored by altering the molecular weight and/or the functionality of the curable composition.

The total amount of isocyanate reactive compounds in the ink composition is typically between 1 and 20% by weight based on the total amount of solids in the ink composition. A typical amount is generally between 2 and 15% by weight or between 3 and 10% by weight. Generally, the higher the amount of isocyanate reactive compounds for the same ratio of isocyanate to isocyanate reactive compounds, the less flexible the resulting cured ink may become, although the kind and nature of the polyisocyanate and isocyanate reactive compounds may influence the resulting flexibility as well.

The polyisocyanate used in the curable composition can be aliphatic or aromatic. Generally the polyisocyanate compound is a di-isocyanate or tri-isocyanate. Polymeric or oligomeric isocyanate containing compounds may be used as well. Mixtures of different polyisocyanate compounds can be used as well. When a mixture of polyisocyanate compounds is used, the average amount of isocyanate groups per molecule will be more than 2 for example at least 2.2 or at least 2.5. Specific examples include toluene-diisocyanate, toluene-triisocyanate, 2,6-toluene diisocyanate, diphenylmethane diisocyanate, isophorone-diisocyanate, hexamethylene diisocyanate, xylene diisocyanate, among others. The amount of polyisocyanate compounds in the curable composition is typically such that at least a stoichiometric amount and preferably an excess of isocyanate groups to isocyanate reactive groups in the composition is present. However it is also possible to use less than a stoichiometric amount.

In a particular aspect of the invention, the ink composition may contain metallic pigments and/or mica. In a particular embodiment, the ink composition comprises a lactone or polylactone compound that may or may not have isocyanate reactive groups. The lactone or polylactone compounds suitable for use in accordance with the present invention advantageously has from about 3 to about 20 carbon atoms. Examples of suitable lactones include caprolactone, t-butyl caprolactone, zeta-enantholactone; delta-valerolactones; monoalkyl-delta-valerolactones, such as the monomethyl-, monoethyl-, and monohexyl-delta-valerolactones, and the like; monoalkyl, dialkyl, and trialkyl-epsilon-caprolactones such as the monomethyl-, monoethyl-, monohexyl-, dimethyl-, di-n-hexyl, trimethyl-, triethyl-epsilon-caprolactones, 5-nonyl-oxepan-2-one, 4,4,6- or 4,6,6-trimethyl-oxepan-2-one and the like; 5-hydroxymethyl-oxepan-2-one; beta-lactones, for example, beta-propiolactone; beta-butyrolactone or pivalolactone; gamma-lactones, such as gamma-butyrolactone; dilactones, such as lactide; dilactides; glycolides, such as tetramethyl glycolides, and the like; dioxanones, such as 1,4-dioxan-2-one, 1,5-dioxepan-2-one, and the like. The lactones can be the optically pure isomers or two or more optically different isomers or other mixtures. Epsilon-caprolactone and its derivatives, for example, methyl-epsilon-caprolactone, and other seven membered ring lactones are especially preferred.

The following components may also be added to the ink composition: matting agents, surfactants, stabilizers, plasticizers, extenders, biocides, and similar.

The total amount of solids in the ink composition may vary widely but is generally between 15% by weight and 60% by weight, for example between 20% by weight and 45% by weight or between 22 and 40% by weight.

The ink composition is printed on at least the back side of the thermoformable sheet, i.e. the side opposite to the side that will define the exterior surface of the decorative part. Accordingly, if the decoration involves an image, the image would be printed in reverse. An ink composition may also printed on the side that forms the exterior surface of the decorative part and the ink coating would thus be exposed on the surface of the decorative apart. In such a case, it will generally be advantageous to apply a clear coat on top of printed ink layer(s). Such a clear coat would serve as a protective layer (e.g., to provide abrasion resistance) and would typically be based on a curable composition, for example similar to the curable composition described above. Generally, the clear coat may be applied by screen printing as well, for example as a final printing after all ink layers have been printed. The clear coat may also be provided as a continuous layer overlaying printed as well as non-printed layers. Printing on both sides allows for obtaining special graphical effects that may desired in a particular application such as, for example, an image or graphic including glossy printing overlaid with matte printing designs.

When the ink composition contains a curable composition as described above or in case a curable composition for a protective layer is printed, the method would also include a curing step. Such a curing step, typically involves a cross-linking reaction of the crosslinking components, for example a polyisocyanate and a compound having isocyanate reactive groups. Typically, the curing is heat activated, for example, by irradiation of the printed sheet with infrared light. A catalyst for accelerating the curing of the curable composition may also be used in the ink composition such that less energy will be required to activate the cross-linking reaction.

Typically, a curing step involves heat activation to a temperature of up to 90°C, up to 120°C or even more, depending on the materials chosen. It can be desirable for the curing step to involve heat activation to a temperature of, for example, from 30°C to 80°C or from 40°C to 60°C. Varying temperature profiles may be used to cause curing. Also, generally heat activation should proceed for a time sufficient to obtain a desired level of curing such that a subsequent color can be printed without blending the different colors together. Depending on the ink composition, this time can be between for example 0.5 and 5 minutes. Further, subsequent of the printing of the different colors, a further heat activation may be employed to fully cure the curable composition in the ink composition(s). Generally, this further heat activation will take at least 30 minutes, for example at least one hour and may be up to several hours. A full cure may also take several days (e.g., 3 days). Also, a higher temperature may be used in this further heat activation and curing.

Following printing and as appropriate and necessary following curing, the printed sheets are subjected to thermoforming.

The thermoforming step is generally performed by inserting the ink printed sheets into a thermoforming machine and then heating them by infrared or other radiant heat source to soften the polymeric sheet, with the temperature and time of the heating operation dependent upon the type of thermoforming polymeric sheet. The ink printed sheets are inserted in the thermoforming machine and therein maintained in a fixed position, for example by clamping them, in order to allow a uniform thermoforming step.

Typically, the printed sheets are heated to a temperature between 100 and 200°C, for example between 130°C and 180°C or between 140°C and 170°C. Typically they are heated for a period of 1s to 3min., for example for 2s to 2 min.. Following this heating, the sheet is typically sufficiently soft for it to be formed into a desired shape by pressing a mold against it.

Thus, when the sheet is sufficiently soft, a mold may be pressed into the printed side (or optionally into the unprinted side) of the sheet and, due to the flexibility that the sheet is obtained in consequence of the thermoforming step, the sheet is allowed to tightly wrap the mold form, taking on its shape permanently. In a particular embodiment, the sheet is pressed between a male and female component of a mold. Vacuum is generally applied to allow the sheet to better wrap the mold.

A negative pressure is applied to one side of the softened sheet, followed by application of a positive pressure from the same side and then pressing the mold against the sheet from the side where the positive pressure has been applied and then finally applying vacuum so the sheet wraps tightly around the mold.

After the sheet has obtained its shape, cooling air is conveniently applied to harden the sheet and to allow it to reach a solid shape. The thermoformed sheet is then removed from the thermoforming machine and may be subjected to the final finishing step by cutting it, for example by a die-cutting device, to give it the final shape. The so obtained decorative part may then be mounted on the part of the vehicle that is to be decorated. In one embodiment the part may be mounted or fixed to the vehicle by a mechanical fastener such as for example screws. In another embodiment, the decorative part may be glued and adhered to the part of the vehicle that is to be decorated. To glue the part to the vehicle any type of adhesive can be used including pressure sensitive adhesives, heat activatable adhesives including hot-melt adhesives as well as cross-linking adhesive compositions. In one aspect of this embodiment, a liquid adhesive composition may be applied on the vehicle part to be decorated and/or on the decorative part and the two may then be adhered together. In yet another aspect of this embodiment, a double sided adhesive tape may be used to adhere the two parts together.

In a further embodiment, a reclosable fastener may be used such as a hook and loop system including for example Dual Lock fasteners available from 3M Co. Thus, in this case one of the matting parts of the hook and loop system would be adhered to the decorative part and the other would be applied to the part of the vehicle to be decorated. Pressing the two matting parts into each other then mechanically fastens the decorative part to the vehicle part.

In the particular embodiment where an adhesive is used to adhere the decorative part to the vehicle part, it may be advantageous to already provide the adhesive layer onto the printed sheet before thermoforming. In such a case, the adhesive layer should be thermoformable and should be applied to the printed side of the sheet as it will be this side that will be facing the part of the vehicle to be decorated.

An adhesive layer is considered to be thermoformable within the scope of the present application if the adhesive layer is capable of being co-formed with the polymeric sheet in the forming step. This typically requires that the adhesive layer has a softening point similar to or below the softening point of the thermoformable polymeric sheet. It will further generally be preferred that the adhesive layer does not become too soft or liquid which could cause undesirable flow of the adhesive during the thermoforming step. Generally, the adhesive layer should also retain its function or capability to adhere the polymeric sheet to another substrate following thermoforming. This is however not a requirement in case the adhesive layer is a heat activatable adhesive layer and the substrate or layer to which the adhesive layer is to adhere is co-formed with the adhesive layer and polymeric sheet in the thermoforming step. In this case, advantage can be taken of the heat in the thermoforming step to simultaneously activate the adhesive during thermoforming thereby adhering the adhesive layer to the co-formed substrate or layer.

Suitable thermoformable adhesives include pressure sensitive adhesives as well as heat activatable adhesives. Heat activatable adhesives include adhesives that are essentially non-tacky at ambient temperature and that become tacky at elevated temperatures. A heat activatable adhesive layer may however also be tacky at ambient temperature but reach its full adhesive characteristics at elevated temperature such that the desired bond strength is obtained by activating the adhesive at elevated temperature, bonding the desired substrate thereto and then cooling the substrate. Heat activatable adhesive layers also include adhesives that upon activation cross-link. As mentioned above, the heat activatable adhesive layer may be used to bond to a desired layer or substrate simultaneously in the thermoforming step. In such a case, the temperature needed to activate the adhesive should be similar to the temperature used in the thermoforming step to form the printed polymeric sheet. Alternatively, if it is desired that the heat activatable adhesive be used to adhere to a substrate following the thermoforming step, it will generally be preferred that the temperature required to activate the adhesive be higher then the temperature used during the thermoforming step such that the adhesive is not activated during the thermoforming. This is particularly so if the heat activatable adhesive layer is a cross-linking adhesive. In case the heat activatable layer is of the type that becomes tacky or increases tackiness upon heating, the activation temperature may coincide with the temperature of thermoforming.

Generally, the adhesive layer will be protected with a thermoformable release liner, in particular when the adhesive layer is a pressure sensitive adhesive or an adhesive that becomes tacky during the thermoforming step. Suitable thermoformable release liners include polymeric films provided with a release coating. Particularly useful thermoformable release liners include polyolefin films such as polyethylene or polypropylene films that may be coated with a release coating such as for example a silicone release coating. It will generally also be preferred that the polyethylene or polypropylene film has a crystalline melting point below the softening point of the thermoformable polymeric sheet.

Suitable heat activatable adhesives include so-called hot melt adhesives that are heated to melt or soften thereby establishing the desired adhesion upon cooling as well as crosslinking adhesives. Heat activatable adhesive include also those that may additionally have pressure sensitive adhesive characteristics. Suitable heat activatable adhesive include epoxy based adhesives as well as hot melt adhesives based on polymers selected from poly (ethyl vinyl acetate), polyamides, polyolefins, polyvinyl ethers, polyvinyl esters and thermoplastic polyurethanes. As desired or needed, the hot melt adhesives may include one or more tackifying resins.

Suitable pressure sensitive adhesive for use with this invention may comply with any of the following characterizations or definitions as used in the art for identifying pressure sensitive adhesives.

One well known means of identifying pressure sensitive adhesives is the Dahlquist criterion. This criterion defines a pressure sensitive adhesive as an adhesive having a 1 second creep compliance of greater than 1 10⁻⁶ cm²/dyne as described in "Handbook of Pressure Sensitive Adhesive Technology", Donatas Satas (Ed.), 2nd Edition, p. 172, Van Nostrand Reinhold, New York, N.Y., 1989. Alternatively, since modulus is, to a first approximation, the inverse of creep compliance, pressure sensitive adhesives may be defined as adhesives having a Young's modulus of less than 1 10⁶ dynes/cm².

Another well known means of identifying a pressure sensitive adhesive is that it is aggressively and permanently tacky at room temperature and firmly adheres to a variety of dissimilar surfaces upon mere contact without the need of more than finger or hand pressure as described in "Glossary of Terms Used in the Pressure Sensitive Tape Industry" provided by the Pressure Sensitive Tape Council, August, 1985.

Another suitable definition of a suitable pressure sensitive adhesive is that it preferably has a room temperature storage modulus within the area defined by the following points as plotted on a graph of modulus versus frequency at 25 °C.: a range of moduli from approximately 2 10⁵ to 4 10⁵ dynes/cm² at a frequency of approximately 0.1 radians/sec (0.017 Hz), and a range of moduli from approximately 2 10⁶ to 8 10⁶ dynes/cm² at a frequency of approximately 100 radians/sec (17 Hz) (for example see FIGS. 8-16 on p. 173 of Donatas Satas, "Handbook of Pressure Sensitive Adhesive Technology", 2nd Edition, Van Nostrand Rheinhold, New York (1989).

The pressure sensitive adhesive used in connection with the present invention is preferably an acrylic based pressure sensitive adhesive but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D.Satas, Ed. Satas and Associates, Warwick RI/USA, 1989 on pages 550-556 and 423-442 respectively.

Particular examples of suitable pressure sensitive adhesives include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylenepropylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Adhesives that may be used to bond to substrates having a low surface energy, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precursor composition comprising one or more alkyl esters of acrylic or methacrylic acid, one or more copolymerizable monomers that have a Lewis base functionality and optionally one or more cross-linkers and (ii) one or more tackifying resins.

Still further pressure sensitive adhesive that may be particularly useful are disclosed in WO 95/13331. The pressure sensitive adhesive disclosed in WO 95/13331 comprises the polymerization product of:
(a) 25-97 parts by weight of an acrylic acid ester of a monohydric alcohol whose homopolymer has a T_{g} of less than 0°C;
(b) 3-75 parts by weight of a non-polar ethylenically unsaturated monomer whose homopolymer has a solubility parameter of no greater than 10.50 and a Tg greater than 15°C; and
(c) 0-5 parts by weight of a polar ethylenically unsaturated monomer whose homopolymer has a solubility parameter of no greater than 10.50 and a Tg greater than 15°C.

Examples of suitable polar and non-polar monomers are as described in said PCT application.

The adhesive layer may be applied in a continuous or discontinuous way and may be applied by a variety of application methods including spraying, coating, laminating and printing. In a particular embodiment, the adhesive layer may be applied by printing the adhesive composition. This is particularly useful for obtaining a discontinuous adhesive layer or adhesive layer that is applied in a particular pattern. For example, the adhesive layer may be applied, e.g. by printing, in a pattern of stripes, bands or discrete spots.

The adhesive layer may be applied at any thickness as desired for the particular purpose of application. Typically, the adhesive layer is applied in a thickness of 10 microns to 3 mm, for example 20 microns to 100 microns or 0.5 mm to 2 mm. The adhesive layer may be applied directly on the surface of the polymeric sheet or on the printed ink coating. However, to increase the adhesion of the adhesive layer to the underlying surface, one or more primer layers may be provided. Alternatively, to increase the adhesiveness, a corona treatment may be carried out on the surface that is to receive the adhesive layer.

Typically, the mold for use in the thermoforming step can be made in an inexpensive way through machining of a suitable material such as resin or metal such as aluminium, brass or magnesium. In particular, the mold may be formed using CNC milling techniques that use CAD data to describe the desired 3D-geometry to form the desired article. The CNC machine may be so-called 3 axis vertical milling machines or so-called 5 axis milling machines.

In an embodiment of the present invention where an adhesive layer is present on the printed thermoformable sheet, it may be desired that the adhesive layer in the thermoformed article has a structured surface comprising microchannels defining between them raised areas. Such a thermoformed article can be obtained by providing the mold for forming the article with a patterned surface of ridges. These ridges will then form the microchannels in the adhesive layer when the mold is pressed against the printed polymeric sheet from the side comprising the thermoformable adhesive. While it may not be required, it will generally be desirable to provide a thermoformable release liner on the adhesive layer and hence, the pattern will also be formed in the release liner. Further if the release liner is removed following thermoforming with a mold having on its surface a pattern of ridges defining between them lower areas, the release liner will show on the side that contacted the adhesive a structured surface that is similar to that contained on the mold.

The pattern of ridges on the mold surface may define any pattern including for example a pattern where the ridges are along one direction and are parallel to each other along the orthogonal direction and are spaced apart at a constant distance, a pattern whereby a series of parallel ridges along one direction is intersected with a series of parallel ridges along another direction, for example a direction perpendicular. In the latter case, the pattern would define a series of discrete lower parts surrounded and separated from each other by the ridges. The corresponding pattern hereof in the adhesive would be a pattern of interconnected microchannels defining between them discrete raised areas.

The dimensions and shape of the ridges as well as their distance from each other (i.e. between them) will be selected such as to generate a desired pattern in the adhesive. Typically it will be desired that the microchannels have a depth of 3 to 150 microns, for example between 5 and 50 microns or between 30 and 100 microns. Typically the width of the microchannels (measured near the top of the channel) may be between 100 and 400 microns, for example between 200 and 300 microns. The frequency of microchannels measured as the number of channels per unit of length may be between 4 and 50 or between 4 and 20, for example between 6 and 16 or 8 and 12. In the case of intersecting microchannels, the distance between them may be different in one direction from the other. In other words, the areas defined between the microchannels may be generally square or rectangular. Depending on how the microchannels intersect, the areas between them can also have other shapes such as hexagonal. The shape of the microchannels may vary widely and may be regular or irregular including concave and V-shaped microchannels.

In yet a further embodiment of the method of the present invention, the part of the vehicle to be decorated is in itself used as the mold. This may offer the advantage that no additional separate mounting or fixing to the part may be needed. For example, the housing of a rear view mirror may be directly used instead of the mold so as to cover the mirror with a desired decorative design. In a particular aspect of this embodiment, the printed sheet may be provided with a thermoformable adhesive layer on the printing of the printed sheet so as to create a firm bonding between the part of the vehicle and the decorative part. A suitable thermoformable adhesive may comprise any of the above described adhesives. For example the thermoformable adhesive may be a cross-linking adhesive that during the thermoforming of the printed sheet starts to cross-link and thereby form a strong permanent bond. In such embodiment, the part may be further post-cured by leaving it at elevated temperature to allow the adhesive to fully cure or cross-link.

The invention is further illustrated with reference to the following examples without the intention however to limit the invention thereto.

### EXAMPLES

### MATERIALS for the Ink Composition of Examples 1 and 2

**D7900:** Clear base ink for preparing desired colored inks commercially available from 3M Company. The clear base ink is based on a PVC resin and acrylic resin and containing a solvent mixture of cyclohexanone, aromatic solvents and ethylene glycol butyl ether acetate.
**P1:** colored pigment dispersion commercially available from Kiian S.P.A. Luisago, Italy with trade name Mankounian -Argon Thermoplus 49.000 series and intended for blending with D7900 clear resin.
**Joncryl(tm) 587:** acrylic polyol commercially available from Johnson (Johnson Polymer LLC, Sturtevant, WI 53177-0902, USA).
**TONE(tm) 200:** polycaprolactone diol commercially available from Dow ( Dow, Midland, Michigan 48674, USA).
**HMDI:** hexamethylene di-isocyanate, Desmodur(tm) N 3390 BA/SN, commercially available from Bayer (Bayer Material Science AG, 51368 Leverkusen, Germany).
**Desmophen A450M PA/X:** acrylic polyol available from Bayer (Bayer Material Science AG, 51368 Leverkusen, Germany).
**CGS 80:** thinner commercially available from 3M Company.

The ink composition of Example 1, according to the invention, was prepared having the following composition:
a) 30 parts per weight D 7900 clear resin;
b) 60 parts per weight of a pigment dispersion P1;
c) 0.83 parts by weight Joncryl(tm) 587;
d) 0.41 parts by weight of TONE(tm) 200;
e) 0.0002 parts by weight dibutyltindilaurate;
f) 0.4 parts by weight HMDI;
g) 0.46 parts by weight Desmophen A450M PA/X
h) 0.00035 parts by weight Zinc napthenate
i) 0.000029 parts by weight Dimethly polysiloxane
j) 5.7 parts by weight CGS 80.

The ink composition of Example 2, according to the invention, was prepared similar as the ink composition of Example 1.

### Preparation of screen printed polymeric sheets for Examples 1 and 2

Two sheets of a clear polycarbonate Makrofol^{™} (available from Bayer AG, Germany) having once a thickness of 4mm for example 1 and 0.8mm for example 2 were screenprinted, using a commercially available flat-bed screen-printer. The desired design was achieved by screen-printing in two steps using the prior described ink composition.

The printed samples were dried in a flat bed oven having four stations. This drying step was done after each color printing. The samples passed through the heating zones at a line speed of 5.5 m per minute. Total oven length was about 5.5 m. Temperature of the four heating zones were as follows: zone 1: 50 °C, zone 2: 60 °C, zones 3 and 4 room temperature ventilation, maximum temperature 35 °C. After the second printing and drying cycle the obtained printed samples were cured at 60 °C for 2h. The dried ink coating had a thickness of ca. 6 to 10 µm

### Preparation of the Male Mold

For example 1 a rotation molded motor cycle fuel tank made from non-pigmented, crosslinkable, thermoplastic polyethylene (XPE) resin was used as male mold. Based on the CAD data for the fuel tank geometry the male mold was machined out of a single block of a synthetic molding resin using CNC milling techniques.

For example 2 no male mold needed to be prepared. An injection molded door handle made from a thermoplastic ABS/PC blended resin was used directly as the part to be decorated.

### Thermoforming Step

For example 1 the printed sheet as obtained above was applied to a Cannon vacuum thermoformer model number Forma™ 1200 (Corso Novara 179 - 27029 Vigevano (PV) - Italy), in such a way that the printed area was facing the male mold. The male mold was the downside part of the thermoforming equipment. When the sheet became flexible, the vacuum led to a wrap-up of the sheet around the outside of a male mold. The temperature of the polycarbonate's thermoforming process was around 178°C (following ISO 360 method B50) and the temperature held for 1 min.
The thermoformed sample was then separated from the mold. The final form of the sample was achieved by cutting.

For example 2 the printed sheet as obtained above was applied to a Cannon vacuum thermoformer model number Forma™ 1200 (Corso Novara 179 - 27029 Vigevano (PV) - Italy), in such a way that the printed area was facing the injection molded ABS/PC door handle to be decorated. The temperature of the polycarbonate's thermoforming process was around 145°C (following ISO 360 method B50) and the temperature held for 1 min until the sheet became flexible. The flexible, printed sheet was then pressed against the door handle while applying vacuum thereto allowing the printed sheet to wrap around the door handle.

### Visual inspection of examples 1-2

The resulting decorative polycarbonate parts of example 1 and 2 were visually inspected for cracks in the printed ink layer. No cracks were found in the printed image.

## Claims

1. Method of decorating a part of a vehicle, comprising:
(i) printing an ink composition onto a major surface of a transparent thermoformable polymeric sheet to obtain a printed sheet and :
(ii) providing a mold having the shape and size of the part to be decorated;
(iii) heating the printed sheet;
(iv) pressing the mold against the printed sheet and applying vacuum thereto to allow the printed sheet to wrap around the mold;
(v) removing the printed sheet from the mold; and
(vi) mounting the printed and formed sheet on the part of said vehicle such that the printed ink composition faces the part of the vehicle that is being decorated;
or alternatively :
(ii) providing a part to be decorated;
(iii) heating the printed sheet; and
(iv) pressing the part against the printed side of the printed sheet and applying vacuum thereto to allow the printed sheet to wrap around the part;
wherein in both alternatives following heating of said printed sheet, a negative pressure is applied to one side of the sheet followed by a positive pressure from said same side.

2. Method according to claim 1 wherein said part is an exterior part of the vehicle.

3. Method according to claim 1 wherein said transparent thermoformable polymeric sheet is protected with a protective sheet releasably attached to the major surface of the polymeric sheet opposite to the major surface that is receiving the ink composition.

4. Method according to claim 1 wherein said printing comprises the printing of an image and wherein said image is reverse printed.

5. Method according to any of the previous claims wherein said ink composition is applied by screen printing and wherein said ink composition comprises a resin selected from the group consisting of polyvinyl chloride, acrylic resin and combinations thereof.

6. Method according to any of the previous claims wherein said ink composition comprises a curable composition of a component having isocyanate reactive groups and a polyisocyanate.

7. Method according to any of the previous claims wherein said polymeric sheet has a thickness between 0.1 and 8 mm.

8. Method according to any of the previous claims wherein said printed and formed sheet is mounted to said part of said vehicles by an adhesive.

9. Method according to any of claims 1 to 7 wherein said printed and formed sheet is screw mounted to said part of said vehicles.

10. Method according to any of the previous claims wherein the part of the vehicle is selected from a fuel tank, side mirror, pillars and window supports.

11. Method according to any of the previous claims wherein the polymeric sheet is heated to a temperature of between 100 and 200°C and for a time of 1s to 5min.

## Patentansprüche

1. Verfahren zur Dekoration eines Teils eines Fahrzeugs, umfassend:
(i) Drucken einer Tintenzusammensetzung auf eine Hauptfläche einer transparenten thermoformbaren polymeren Platte unter Erhalt einer bedruckten Platte und:
(ii) Bereitstellen einer Form mit der Gestalt und Größe des zu dekorierenden Teils;
(iii) Erhitzen der bedruckten Platte;
(iv) Drücken der Form gegen die bedruckte Platte und Anwenden eines Vakuums darauf, damit sich die bedruckte Platte um die Form herumwickeln kann;
(v) Entfernen der bedruckten Platte von der Form; und
(vi) Anbringen der bedruckten und geformten Platte an dem Teil des Fahrzeugs derart, dass die gedruckte Tintenzusammensetzung zu dem zu dekorierenden Teil des Fahrzeugs weist;
oder alternativ dazu:
(ii) Bereitstellen eines zu dekorierenden Teils;
(iii) Erhitzen der bedruckten Platte; und
(iv) Drücken des Teils gegen die bedruckte Seite der bedruckten Platte und Anwenden eines Vakuums darauf, damit sich die bedruckte Platte um das Teil herumwickeln kann;
wobei bei beiden Alternativen, infolge des Erhitzens der bedruckten Platte, ein Vakuum auf eine Seite der Platte gefolgt von einem Überdruck von der gleichen Seite angewendet wird.

2. Verfahren nach Anspruch 1, wobei es sich bei dem Teil um ein Außenteil des Fahrzeugs handelt.

3. Verfahren nach Anspruch 1, wobei die transparente thermoformbare polymere Platte mit einer Schutzplatte geschützt wird, die entfernbar auf der Hauptfläche der polymeren Platte gegenüber der Hauptfläche, die die Tintenzusammensetzung erhält, angebracht ist.

4. Verfahren nach Anspruch 1, wobei das Drucken das Drucken eines Bilds umfasst und wobei das Bild seitenverkehrt gedruckt wird.

5. Verfahren nach einem der vorhergehenden Ansprüche, wobei die Tintenzusammensetzung durch Siebdruck aufgetragen wird und wobei die Tintenzusammensetzung ein Harz umfasst, das aus der Gruppe bestehend aus Polyvinylchlorid, Acrylharz und Kombinationen davon ausgewählt ist.

6. Verfahren nach einem der vorhergehenden Ansprüche, wobei die Tintenzusammensetzung eine härtbare Zusammensetzung aus einer Komponente mit mit Isocyanat reaktiven Gruppen und einem Polyisocyanat umfasst.

7. Verfahren nach einem der vorhergehenden Ansprüche, wobei die polymere Platte eine Dicke zwischen 0,1 und 8 mm aufweist.

8. Verfahren nach einem der vorhergehenden Ansprüche, wobei die bedruckte und geformte Platte mit einem Klebstoff an das Teil des Fahrzeugs angebracht wird.

9. Verfahren nach einem der Ansprüche 1 bis 7, wobei die bedruckte und geformte Platte an das Teil des Fahrzeugs geschraubt wird.

10. Verfahren nach einem der vorhergehenden Ansprüche, wobei das Teil des Fahrzeugs ausgewählt ist aus den Folgenden: Kraftstofftank, Seitenspiegel, Säulen und Scheibenträgern.

11. Verfahren nach einem der vorhergehenden Ansprüche, wobei die polymere Platte für eine Zeit von 1 s bis 5 min auf eine Temperatur zwischen 100 und 200°C erhitzt wird.

## Revendications

1. Procédé de décoration d'une partie d'un véhicule, comprenant les étapes qui consistent à :
(i) imprimer une composition d'encre sur une surface principale d'une feuille polymère thermoformable transparente de manière à obtenir une feuille imprimée et
(ii) prévoir un moule qui présente la forme et la taille de la pièce à décorer,
(iii) chauffer la feuille imprimée,
(iv) repousser le moule contre la feuille imprimée et y appliquer une dépression pour permettre à la feuille imprimée d'entourer le moule,
(v) enlever la feuille imprimée du moule et
(vi) monter la feuille imprimée et façonnée sur la partie dudit véhicule de telle sorte que la composition d'encre imprimée soit tournée vers la partie du véhicule qui est décorée,
ou en variante :
(ii) prévoir une partie à décorer,
(iii) chauffer la feuille imprimée et
(iv) repousser la partie contre le côté imprimé de la feuille imprimée et y appliquer une dépression pour permettre à la feuille imprimée d'entourer la partie,
dans les deux variantes, après le chauffage de ladite feuille imprimée une pression négative étant appliquée sur un côté de la feuille avant que soit appliquée une pression positive dudit même côté.

2. Procédé selon la revendication 1, dans lequel ladite partie est une partie extérieure du véhicule.

3. Procédé selon la revendication 1, dans lequel ladite feuille polymère thermoformable transparente est protégée par une feuille de protection reliée de manière libérable à la surface principale de la feuille polymère du côté opposé à la surface principale qui reçoit la composition d'encre.

4. Procédé selon la revendication 1, dans lequel ladite étape d'impression comprend l'impression d'une image et dans lequel ladite image est imprimée à l'envers.

5. Procédé selon l'une quelconque des revendications précédentes, dans lequel ladite composition d'encre est appliquée par sérigraphie et dans lequel ladite composition d'encre comprend une résine sélectionnée dans l'ensemble constitué du poly(chlorure de vinyle), d'une résine acrylique et de leurs combinaisons.

6. Procédé selon l'une quelconque des revendications précédentes, dans lequel ladite composition d'encre contient une composition durcissable d'un composant qui présente des groupes isocyanate réactif et un polyisocyanate.

7. Procédé selon l'une quelconque des revendications précédentes, dans lequel ladite feuille polymère a une épaisseur comprise entre 0,1 et 8 mm.

8. Procédé selon l'une quelconque des revendications précédentes, dans lequel ladite feuille imprimée et façonnée est montée sur ladite partie dudit véhicule à l'aide d'un adhésif.

9. Procédé selon l'une quelconque des revendications 1 à 7, dans lequel ladite feuille imprimée et façonnée est montée par vissage sur ladite partie dudit véhicule.

10. Procédé selon l'une quelconque des revendications précédentes, dans lequel la partie du véhicule est sélectionnée parmi un réservoir de carburant, un rétroviseur latéral, des colonnes et des supports de fenêtres.

11. Procédé selon l'une quelconque des revendications précédentes, dans lequel la feuille polymère est chauffée à une température comprise entre 100 et 200°C pendant une durée de 1 seconde à 5 minutes.
